# EUROPEAN PATENT SPECIFICATION

(11) **EP 1 457 121 B1**
(45) Date of publication and mention of the grant of the patent: **17.01.2007**
(21) Application number: 04100946.5
(22) Date of filing: 09.03.2004
(51) Int. Cl.: A24C 5/00, A24C 5/31

(54) **Method of controlling and automatically restarting an automatic machine for processing tobacco articles**
Verfahren zum Überprüfen und automatisch Wiederanfahren einer automatischen Tabakartikelverarbeitungsmaschine
Méthode pour contrôler et automatiquement redémarrer une machine automatique pour manipuler des articles à tabac

(30) Priority: 10.03.2003 IT BO20030130
(43) Date of publication of application: 15.09.2004
(73) Proprietor: G.D SOCIETÀ PER AZIONI, 40133 Bologna (IT)
(72) Inventor: Draghetti, Fiorenzo, 40059 Medicina (IT)
(74) Representative: Jorio, Paolo

(56) References cited:
- EP-A- 1 267 231
- US-A- 3 889 240

## Description

The present invention relates to a method of controlling an automatic machine for processing tobacco articles.

The present invention may be used to advantage in an automatic cigarette manufacturing or packing machine, to which the following description refers purely by way of example.

In modern automatic machines for manufacturing or packing cigarettes, the status of the machine is monitored to determine error signals, in the event of which, the machine is stopped to enable the operator to eliminate the reason for the error signal.

For example, various sensors are provided for real-time determining the characteristics of the processed articles (e.g. cigarette weight and dimensions, cigarette tip fill, complete groups of cigarettes inside packets, external appearance of packets of cigarettes, etc.) to enable a control unit to compare the detected characteristics with corresponding required characteristics, and to generate a reject signal when the difference between the two exceeds a predetermined relative threshold. When a reject signal of the above type is generated, the article responsible is automatically rejected, i.e. removed from the normal production flow, by a respective reject device controlled by the control unit. To reduce the number of rejects, which may involve considerable cost in terms of production loss and tobacco salvage, if the same type of reject signal is repeated too frequently, i.e. above a respective threshold value, the control unit generates an error signal to stop the automatic machine and request operator assistance.

In addition to the above, the control unit also stops the automatic machine in the event of various individual events detected by appropriate sensors.

The total downtime of currently marketed cigarette manufacturing and packing systems has been found to be relatively high, on account of both the frequency with which the machine is stopped, and the length of each stoppage which is mainly due to the time taken for the operator to intervene.

It is an object of the present invention to provide a method of controlling an automatic machine for processing tobacco articles, designed to eliminate the aforementioned drawbacks, and which, in particular, is cheap and easy to implement, and provides for reducing total downtime of the machine.

According to the present invention, there is provided a method of controlling an automatic machine for processing tobacco articles, as claimed in Claim 1 and, preferably, in any one of the following Claims depending directly or indirectly on Claim 1.

A non-limiting embodiment of the present invention will be described by way of example with reference to the accompanying drawings, in which:
Figure 1 shows a schematic view of a cigarette manufacturing and packing system comprising automatic machines implementing the control method according to the present invention;
Figure 2 shows a schematic side view of part of a cigarette manufacturing machine.

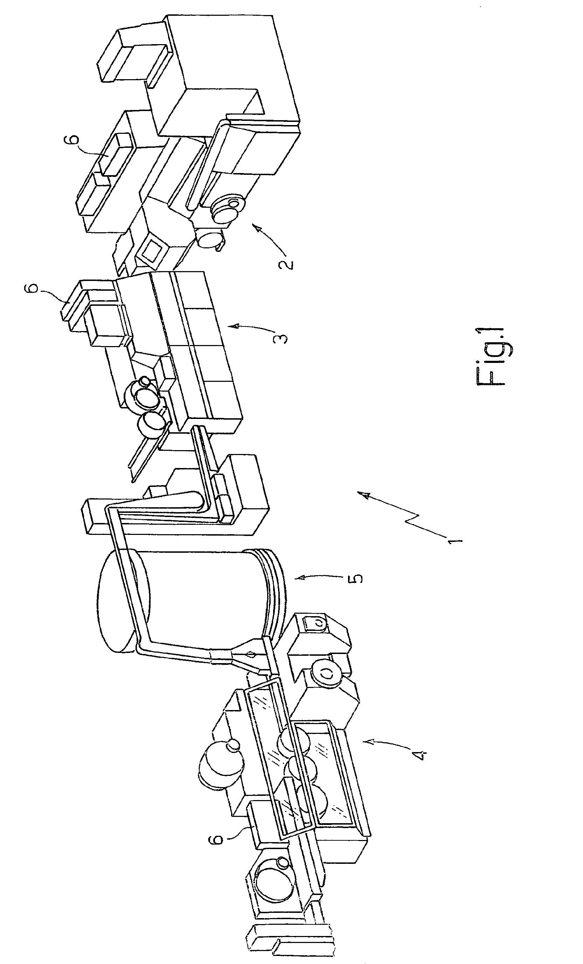

Number 1 in Figure 1 indicates as a whole a system for manufacturing and packing cigarettes (not shown in detail), and which comprises a manufacturing machine 2, a filter assembly machine 3, and a packing machine 4. A store 5 is interposed between filter assembly machine 3 and packing machine 4 to accumulate a varying number of cigarettes, so that filter assembly machine 3 can continue running even in the event of temporary stoppage of packing machine 4, and vice versa.

Each machine 2, 3, 4 comprises a respective control unit 6 for monitoring operation of machine 2, 3, 4, and in particular for periodically checking the status of machine 2, 3, 4 to determine any error signals ES, and to stop machine 2, 3, 4 in the event of an error signal ES. When stopped due to an error signal ES, machine 2, 3, 4 is restarted independently and automatically by respective control unit 6 a given number of times, and is stopped definitely by respective control unit 6 if the error signal ES does not disappear during one of the restart steps.

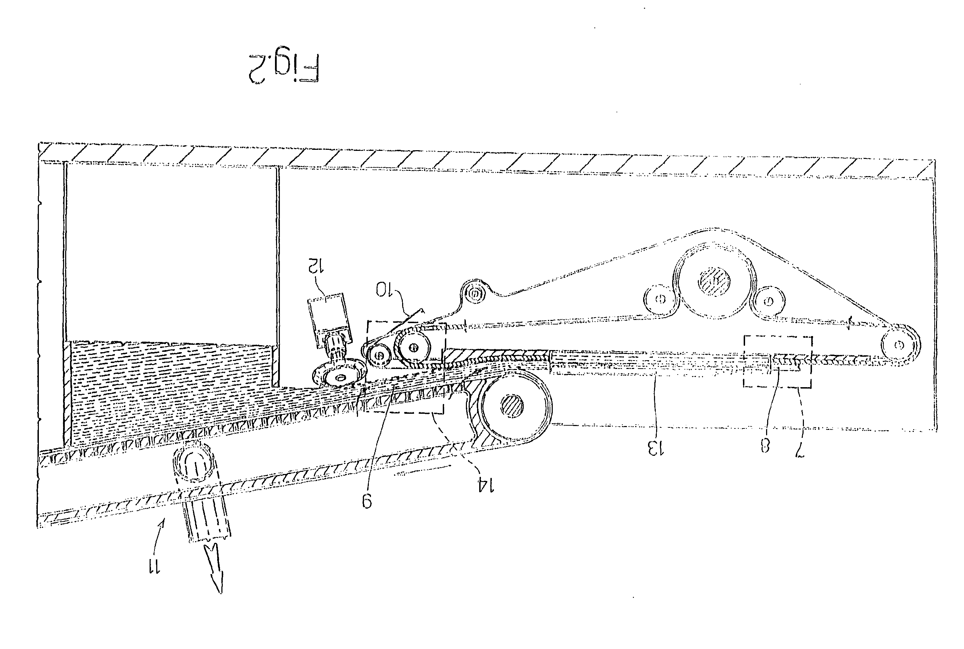

For example, each machine 2, 3, 4 comprises a number of sensors 7, each connected to respective control unit 6 and for determining a respective characteristic of the processing operation being performed. Each control unit 6 compares the characteristics detected by sensors 7 (one of which is shown in detail in Figure 2) with corresponding ideal characteristics stored in a memory of the control unit, and generates a respective reject signal when the difference between a detected and corresponding ideal characteristic exceeds a relative predetermined threshold. When a reject signal is generated, the processed article responsible for the reject signal is automatically rejected, i.e. is removed from the normal production flow, by a respective known reject device (not shown) controlled by relative control unit 6. If the same type of reject signal is repeated too frequently, i.e. above a respective threshold value, the relative control unit 6 generates an error signal ES.

In a preferred embodiment, the number of times a machine 2, 3, 4 is restarted depends on the type of error signal ES responsible for stopping machine 2, 3, 4; and a time interval of predetermined length, or of a length depending on the type of error signal ES responsible for stopping machine 2, 3, 4, may elapse before machine 2, 3, 4 is restarted.

Before being restarted, machine 2, 3, 4 is normally reset by corresponding control unit 6 to an initial start configuration; and, before restarting machine 2, 3, 4, respective control unit 6 activates devices for eliminating the cause of the error signal ES, such as devices for cleaning parts of machine 2, 3, 4 in which the tobacco articles are processed.

In a preferred embodiment, in the event of an error signal ES, control unit 6 compares the error signal ES with a predetermined set of error signals ES, and machine 2, 3, 4 is only restarted independently and automatically if the error signal ES falls within that set. This prevents the machine 2, 3, 4 from being restarted in the event of error signals ES which cannot be solved without the assistance of the operator, or which indicate a hazard which might damage machine 2, 3, 4.

Figure 2, for example, shows part of manufacturing machine 2, and in particular part of the section forming a tobacco rod 8 comprising a bead 9 of tobacco wrapped in a strip 10 of paper material. The tobacco bead 9 is formed on a suction belt conveyor 11, and is of constant height regulated by a shaving device 12. Downstream from shaving device 12, tobacco bead 9 is fed to a forming beam 13 together with strip 10, so that strip 10 is wrapped about tobacco bead 9. Downstream from forming beam 13, a known sensor 7, connected to respective control unit 6, determines the weight per unit length and the diameter of tobacco rod 8; and, between shaving device 12 and forming beam 13, a cleaning device 14, controlled by respective control unit 6, blows compressed air into the region through which tobacco bead 9 travels, in a direction substantially crosswise to the travelling direction of tobacco bead 9.

In actual use, when sensor 7 detects a diameter and/or density of tobacco rod 8 outside respective acceptance ranges, a corresponding reject signal is generated; and, if the situation is not corrected by respective control unit 6 adjusting, for example, the work quota of shaving device 12, the reject signal is repeated and eventually exceeds the relative threshold frequency, so that an error signal ES is generated and manufacturing machine 2 is stopped. Once manufacturing machine 2 is stopped, respective control unit 6 may wait a predetermined time interval, activates cleaning device 14 to attempt to remove any residual tobacco from the region through which tobacco bead 9 travels, and then restarts manufacturing machine 2, after first resetting it to a corresponding initial start configuration.

The control method described above provides for reducing total downtime, by certain machine stoppages being correctable with one restart of machine 2, 3, 4 (e.g. when the error signal ES is generated by a temporary, accidental cause, such as a join or damaged portion in a reel-fed strip) or by activating automatic repair devices on machine 2, 3, 4 (such as cleaning device 14 described above).

## Claims

1. A method of controlling a machine for processing tobacco articles; the method providing for cyclically checking the status of the machine (2, 3, 4) to determine any error signals (ES), and stopping the machine (2, 3, 4) in the event of an error signal (ES); and the method being **characterized in that,** following stoppage of the machine (2, 3, 4) due to an error signal (ES), the machine (2, 3, 4) is restarted independently and automatically a given number of times, and the machine (2, 3, 4) is stopped definitely if the error signal (ES) does not disappear during one of the restart steps.

2. A method as claimed in Claim 1, wherein the number of times the machine (2, 3, 4) is restarted depends on the type of error signal (ES) responsible for stopping the machine (2, 3, 4).

3. A method as claimed in Claim 1 or 2, wherein a given time interval is allowed before the machine (2, 3, 4) is restarted.

4. A method as claimed in Claim 3, wherein the length of the time interval depends on the type of error signal (ES) responsible for stopping the machine (2, 3, 4) .

5. A method as claimed in any one of Claims 1 to 4, wherein, before the machine (2, 3, 4) is restarted, devices (14) are activated to eliminate the cause of the error signal (ES).

6. A method as claimed in any one of Claims 1 to 5, wherein, before the machine (2, 3, 4) is restarted, devices (14) are activated to clean parts of the machine (2, 3, 4) in which the tobacco articles are processed.

7. A method as claimed in any one of Claims 1 to 6, wherein, before the machine (2, 3, 4) is restarted, the machine (2, 3, 4) is reset to an initial start configuration.

8. A method as claimed in any one of Claims 1 to 7, wherein, in the event of an error signal (ES), the error signal (ES) is compared with a given set of error signals (ES), and the machine (2, 3, 4) is only restarted independently and automatically if the error signal (ES) falls within said set.

9. A method as claimed in Claim 8, wherein said set contains error signals (ES) generated when at least one processing characteristic of the articles is outside a respective acceptance range with a frequency above a relative threshold value.

## Patentansprüche

1. Verfahren zum Kontrollieren einer Maschine zur Verarbeitung von Tabakartikeln; wobei das Verfahren für das zyklische Überprüfen des Startors der Maschine (2, 3, 4) sorgt, um jegliche Fehlersignale (ES) zu erfassen und die Maschine (2, 3, 4) in dem Fall eines Fehlersignals (ES) anzuhalten; und wobei das Verfahren **dadurch gekennzeichnet ist, dass** nach einem Stillstand der Maschine (2, 3, 4) aufgrund eines Fehlersignals (ES) die Maschine (2, 3, 4) unabhängig und automatisch eine gegebene Anzahl von Malen wieder angefahren wird und die Maschine (2, 3, 4) definitiv angehalten wird, wenn das Fehlersignal (ES) während einem der Wiederanfahrschritte nicht verschwindet.

2. Verfahren nach Anspruch 1, wobei die Anzahl von Malen, die die Maschine (2, 3, 4) wieder angefahren wird, von der Art des Fehlersignals (ES) abhängt, das für das Anhalten der Maschine (2, 3, 4) verantwortlicht ist.

3. Verfahren nach Anspruch 1 oder 2, wobei ein gegebenes Zeitintervall verstreichen darf, bevor die Maschine (2, 3, 4) wieder angefahren wird.

4. Verfahren nach Anspruch 3, wobei die Länge des Zeitintervalls von der Art des Fehlersignals (ES) abhängt, das für das Anhalten der Maschine (2, 3, 4) verantwortlich ist.

5. Verfahren nach einem der Ansprüche 1 bis 4, wobei bevor die Maschine (2, 3, 4) wieder angefahren wird, Vorrichtungen (14) aktiviert werden, um die Ursache des Fehlersignals (ES) zu beseitigen.

6. Verfahren nach einem der Ansprüche 1 bis 5, wobei bevor die Maschine (2, 3, 4) wieder angefahren wird, Vorrichtungen (14) aktiviert werden, um Teile der Maschine (2, 3, 4) zu reinigen, in denen Tabakartikel verarbeitet werden.

7. Verfahren nach einem der Ansprüche 1 bis 6, wobei bevor die Maschine (2, 3, 4) wieder angefahren wird, die Maschine (2, 3, 4) auf eine anfängliche Startkonfiguration zurückgesetzt wird.

8. Verfahren nach einem der Ansprüche 1 bis 6, wobei im Fall eines Fehlersignals (ES) das Federsignal (ES) mit einem gegebenen Satz von Fehlersignalen (ES) verglichen wird und die Maschine (2, 3, 4) nur unabhängig und automatisch wieder angefahren wird, wenn das Fehlersignal (ES) in diesen Satz fällt.

9. Verfahren nach Anspruch 8, wobei der Satz Fehlersignale (ES) enthält, die erzeugt werden, wenn mindestens eine Verarbeitungseigenschaft der Artikel sich mit einer Häufigkeit über einem jeweiligen Grenzwert außerhalb eines jeweiligen Akzeptanzbereichs befindet.

## Revendications

1. Procédé pour commander une machine pour manipuler des articles à tabac ; le procédé comprenant les étapes consistant à vérifier de façon cyclique l'état de la machine (2, 3, 4) de façon à déterminer des signaux d'erreur quelconques (ES), et à arrêter la machine (2, 3, 4) dans le cas d'un signal d'erreur (ES) ; et le procédé étant **caractérisé en ce que**, à la suite de l'arrêt de la machine (2, 3, 4) dû à un signal d'erreur (ES), la machine (2, 3, 4) est redémarrée de façon indépendante et automatiquement un nombre de fois donné, et la machine (2, 3, 4) est arrêtée définitivement si le signal d'erreur (ES) ne disparaît pas au cours de l'une des étapes de redémarrage.

2. Procédé selon la revendication 1, dans lequel le nombre de fois où la machine (2, 3, 4) est redémarrée dépend du type de signal d'erreur (ES) responsable de l'arrêt de la machine (2, 3, 4).

3. Procédé selon la revendication 1 ou 2, dans lequel un intervalle de temps donné est autorisé avant que la machine (2, 3, 4) ne soit redémarrée.

4. Procédé selon la revendication 3, dans lequel la longueur de l'intervalle de temps dépend du type de signal d'erreur (ES) responsable de l'arrêt de la machine (2, 3, 4).

5. Procédé selon l'une quelconque des revendications 1 à 4, dans lequel, avant que la machine (2, 3, 4) ne soit redémarrée, des dispositifs (14) sont activés afin d'éliminer la cause du signal d'erreur (ES).

6. Procédé selon l'une quelconque des revendications 1 à 5, dans lequel, avant que la machine (2, 3, 4) ne soit redémarrée, des dispositifs (14) sont activés afin de nettoyer des pièces de la machine (2, 3, 4) dans lesquelles les articles à tabac sont manipulés.

7. Procédé selon l'une quelconque des revendications 1 à 6, dans lequel, avant que la machine (2, 3, 4) ne soit redémarrée, la machine (2, 3, 4) est réinitialisée à une configuration de départ initiale.

8. Procédé selon l'une quelconque des revendications 1 à 7, dans lequel, dans le cas d'un signal d'erreur (ES), le signal d'erreur (ES) est comparé à un ensemble de signaux d'erreur donné (ES), et la machine (2, 3, 4) est redémarrée de façon indépendante et automatiquement uniquement si le signal d'erreur (ES) se situe à l'intérieur dudit ensemble.

9. Procédé selon la revendication 8, dans lequel ledit ensemble contient des signaux d'erreur (ES) produits quand au moins une caractéristique de manipulation des articles se situe hors d'une plage d'acceptation respective avec une fréquence se situant plus haut qu'une valeur de seuil relative.
